## Europäisches Patentamt
## European Patent Office
## Office européen des brevets

(19)

(11) Numéro de publication: **0 010 479**
**A1**

(12) ## DEMANDE DE BREVET EUROPEEN

(21) Numéro de dépôt: **79400711.2**

(22) Date de dépôt: **05.10.79**

(51) Int. Cl.³: **C 04 B 35/00**
**C 04 B 35/46, H 01 B 3/12**
**H 01 G 4/12**

(30) Priorité: **18.10.78 FR 7829635**

(43) Date de publication de la demande:
**30.04.80 Bulletin 80/9**

(84) Etats Contractants Désignés:
**BE DE GB IT NL**

(71) Demandeur: **"THOMSON-CSF"**
**173, boulevard Haussmann**
**F-75360 Paris Cedex 08(FR)**

(72) Inventeur: **Hildebrantd, Mieczslaw**
**"THOMSON-CSF" - SCPI 173, bld Haussmann**
**F-75360 Paris Cedex 08(FR)**

(72) Inventeur: **Charles, Eliane**
**"THOMSON-CSF" - SCPI 173, bld Haussmann**
**F-75360 Paris Cedex 08(FR)**

(74) Mandataire: **Giraud, Pierre et al,**
**"THOMSON-CSF" - SCPI 173, bld Haussmann**
**F-75360 Paris Cedex 08(FR)**

(54) **Céramique diélectrique à basse température de frittage et son procédé de fabrication; composant électronique et condensateur électrique comportant ladite céramique diélectrique.**

(57) L'invention se rapporte à des céramiques diélectriques présentant des permittivités au moins égales à quelques centaines d'unités, voire supérieures à 1000. Elle a pour but l'abaissement de la température de frittage pour une composition donnée, par exemple titanate de baryum.

Le céramique suivant l'invention comporte une phase polycristalline par exemple en titanate de baryum, et une phase interstitielle, celle-ci étant essentiellement constituée par un fondant, c'est-à-dire une solution solide constituée par au moins deux oxydes des corps suivants: aluminium, bismuth, calcium, cuivre, germanium, manganèse, plomb, silicium et titane. La quantité de fondant initialement incorporée dans le mélange des matières premières représente de 0,3 à 3% en moles. Un excès de titane de 2 à 4% est également utile.

Application aux condensateurs du type "céramique", notamment multicouches.

EP 0 010 479 A1

## CERAMIQUE DIELECTRIQUE A BASSE TEMPERATURE DE FRITTAGE ET SON APPLICATION A LA FABRICATION DE COMPOSANTS ELECTRONIQUES.

L'invention concerne l'obtention d'un matériau transformable par frittage en céramique diélectrique utilisable pour fabriquer des composants électroniques nécessitant une bonne permittivité, notamment, des condensateurs électriques du type céramique des types I et II, et des condensateurs céramiques du type multicouches.

On sait que les céramiques diélectriques sont constituées par une composition de base, par exemple le titanate de baryum dans le cas des céramiques à forte permittivité ($\varepsilon > 1000$) ou une composition équivalente au point de vue des propriétés diélectriques par exemple une solution solide de titanate de baryum et de composés analogues dans lesquels une partie du baryum est remplacé par exemple par du strontium du plomb ou du calcium et une partie du titane par du zirconium, du silicium ou de l'étain. Dans ce qui suit l'expression "combinaison équivalente" doit être entendue en ce sens.

Or la cuisson de ces céramiques nécessite, pour le frittage final, une température de 1300° C à 1500° C. Une température aussi élevée nécessite des fours assez onéreux et en outre interdit l'utilisation de certains alliages pour constituer les électrodes intégrées à certains dispositifs céramiques tels que les armatures des condensateurs "multicouche". Elle oblige à recourir à des métaux très onéreux tels que le palladium, qui résiste aux hautes températures.

L'invention tend à remédier à ces inconvénients.

Le procédé de fabrication d'une céramique diélectrique, composée en majorité de titanate de baryum

2

ou d'une composition équivalente, est caractérisé en ce qu'il comporte une synthèse préalable d'un fondant pour former une solution solide d'au moins deux oxydes appartenant au groupe des oxydes des corps suivants : aluminium, bismuth, calcium, cuivre, germanium, manganèse, plomb, silicium et titane, la quantité d'oxydes représentant en moles 0,3 à 3 % des composants de la céramique, ladite solution solide étant ensuite broyée puis mélangée avec les matières premières de fabrication de la céramique en ajoutant une quantité d'oxyde de titane représentant en moles 2 à 4 % des composants de la céramique.

Suivant une première variante de l'invention, le procédé de fabrication est caractérisé en ce qu'il comporte, au stade du mélange initial des matières premières de fabrication de la céramique, un premier ajout composé d'un mélange de poudre de deux oxydes appartenant au groupe des oxydes des corps suivants : aluminium, bismuth, calcium, cuivre, germanium, manganèse, plomb et silicium, cet ajout représentant en moles 0,3 à 3 % de l'ensemble des composants de la céramique, et un deuxième ajout constitué d'oxyde de titane et représentant en moles 2 à 4 % des composants de la céramique.

Suivant une deuxième variante de l'invention, le procédé de fabrication est caractérisé en ce qu'il comporte, au stade du mélange initial des matières premières de fabrication de la céramique, un premier ajout constitué par de la poudre d'un oxyde appartenant au groupe des corps suivants : aluminium, bismuth, calcium, cuivre, germanium, manganèse, plomb et silicium, cet ajout représentant en moles 0,3 à 3 % de l'ensemble des composants de la céramique, et un deuxième ajout d'oxyde de titane représentant en moles 2 à 6 % de l'ensemble des composants de la céramique.

3

L'invention est utilisée avantageusement dans la fabrication de condensateurs multicouches. En effet, en raison de la température de frittage de ces matériaux plus basse que dans le cas des matériaux classiques, on peut utiliser des alliages moins riches en palladium donc moins onéreux pour constituer les électrodes internes déposées avant frittage dans l'empilage de couches isolantes. A titre d'exemple, lorsque la température de frittage ne dépasse pas 1200° C, on utilisera un alliage à 30 % de palladium et 70 % d'argent au lieu d'alliages à prédominance très forte de palladium.

D'autres avantages de l'invention apparaîtront dans les exemples donnés ci-après, notamment en ce qui concerne la densité, la résistivité et les pertes diélectriques, alors que les valeurs de permittivité demeurent excellentes.

L'invention sera mieux comprise, et d'autres caractéristiques apparaîtront au moyen de la description des méthodes de fabrication et des exemples de fondants utilisés notamment avec une composition de base contenant essentiellement du titanate de baryum.

On se réfère, dans ce qui suit, au procédé classique de fabrication de la céramique diélectrique, notamment à celui qui comprend les étapes suivantes :

a) mélange de matières premières en quantités fixées en fonction de la composition finale de la céramique, compte-tenu des pertes au feu résultant des traitements thermiques ultérieurs ;

b) broyage du mélange ainsi obtenu, soit à sec, soit en milieu liquide, à l'aide de jarres à billes ou de broyeurs plus élaborés dits "à attrition" ;

c) traitement thermique en phase solide dit de "chamottage" ;

d) nouveau broyage (facultatif) ;

e) mise en forme sous pression du produit obtenu par pressage dans des moules, soit par pressage dit "isostatique" dans un moule en caoutchouc, soit par coulage des pièces simples telles que les couches isolantes pour condensateur, soit par extrusion ou toute autre méthode classique ;

f) traitement thermique de frittage à la pression atmosphérique.

Dans une première méthode, on effectue préalablement la synthèse séparée du fondant, c'est-à-dire d'une solution solide de deux ou trois oxydes des métaux précités (Cu, Ti, Bi par exemple). Cette synthèse comporte les sous-étapes suivantes :

1. Mélange de poudres d'oxydes de façon analogue à celle de l'étape (a) du procédé classique ;

2. Broyage, analogue à celui de l'étape (b) du procédé classique ;

3. Traitement thermique, à une température supérieure à la température de fusion du fondant telle qu'elle résulte des proportions réalisées à la première sous-étape ;

4. Après refroidissement et solidification du produit obtenu, concassage et broyage de ce produit pour obtenir le fondant à l'état de poudre à granulométrie fine et régulière, le diamètre moyen du grain pouvant toutefois varier de 0,1 à 10 micromètres.

Après avoir mélangé la poudre ainsi obtenue aux matières premières de la céramique, on procède avec le mélange ainsi obtenu aux étapes (b) à (f) du procédé classique. Toutefois, à l'étape (f) la température du traitement thermique est nettement inférieure à celle du traitement classique.

Dans une deuxième méthode, les sous-étapes (1) et (2) sont identiques à celle de la première méthode mais on effectue le chamottage (3è sous étape) à une température inférieure à la température classique de l'étape (c) de chamottage, en pratique à une température inférieure à la température de fusion du fondant. La réaction de mise en solution solide a donc lieu en phase solide, ce qui est une particularité du chamottage classique, mais éventuellement réalisée à température plus basse que dans le procédé classique, du fait de la présence du mélange d'oxydes, éventuellement eutectique. Il y a lieu de noter que les quantités de matières traitées ne représentent qu'une faible partie des quantités totales à traiter dans la fabrication proprement dite de la céramique.

La quatrième sous-étape est analogue à celle de la première méthode, sauf qu'il n'y a pas de solidification préalable puisqu'il n'y a pas eu de fusion ; elle est suivie des étapes (b) à (f) du procédé classique, le frittage de l'étape (f) ayant encore lieu à une température moindre que dans le procédé classique.

Dans une troisième méthode, on n'effectue pas de synthèse séparée du fondant, mais on traite les composants du fondant comme des matières premières du produit final.

Dans cette troisième méthode les étapes du procédé de fabrication ne se différencient de celles du procédé classique que par la température des traitements thermiques :

- le chamottage est effectué à une température comprise entre 900° C et 1250° C sans tenir compte de la température de fusion qu'aurait le mélange d'oxydes effectué dans les proportions initialement choisies ;

- le frittage est effectué à une température plus basse que dans le procédé classique, température qui résulte soit des données figurant dans les exemples ci-après, soit des résultats d'essais préalables.

EXEMPLES :

La méthode utilisée est la deuxième méthode.

Les matières premières de départ comprennent des oxydes et des sels en quantités calculées pour réaliser

6

les proportions molaires suivantes : Ba Ti $O_z$ : 98 % à 99 % avec un excès de Ti $O_2$ de 2 à 4 % ; Fondant : 1 à 2 %.

Le tableau I ci-après donne, pour chaque exemple, les caractéristiques de composition de départ et la température de frittage.

TABLEAU I

| Exemple n° | Proportions molaires (%) | | | Composition fondant (moles %) | Température de frittage |
|---|---|---|---|---|---|
| | Ba Ti $O_z$ | Excès Ti $O_2$ | Total fondant | | |
| 1 | 99 | 2 | 1 | $Cu_2$ O : 50<br>Ti $O_2$ : 50 | 1150° C |
| 2 | 98,5 | 2 | 1,5 | idem | idem |
| 3 | 98 | 2 | 2 | idem | idem |
| 4 | 98,5 | 2 | 1,5 | $Cu_2$ O : 58,5<br>Pb O : 41,5 | idem |
| 5 | 98 | 2 | 2 | idem | idem |
| 6 | 98,5 | 4 | 1,5 | idem | 1170° C |
| 7 | 98 | 4 | 2 | idem | idem |
| 8 | 98,5 | 2 | 1,5 | $Cu_2$ O : 92<br>Si $O_2$ : 8 | 1150° C |
| 9 | 98 | 2 | 2 | idem | idem |
| 10 | 98,5 | 4 | 1,5 | idem | 1170° C |
| 11 | 99 | 2 | 1 | idem | 1150° C |
| 12 | 99 | 2 | 1 | Cu O : 87<br>Ca O : 13 | 1170° C |
| 13 | 98 | 2 | 2 | idem | 1150° C |
| 14 | 98 | 4 | 2 | idem | 1170° C |

| Exemple n° | Proportions molaires(%) | | | Composition fondant (moles %) | Température de frittage |
|---|---|---|---|---|---|
| | Ba Ti O | Excès Ti $O_2$ | Total fondant | | |
| 15 | 99 | 2 | 1 | Cu O : 86,7 <br> $Al_2 O_3$ :13,3 | 1170° C |
| 16 | 99 | 2 | 1 | idem | 1195° C |
| 17 | 98,5 | 4 | 1,5 | $Bi_2 O_3$ : 86 <br> $Ge O_2$ : 14 | 1220° C |

Les chiffres relatifs aux oxydes du fondant peuvent être majorés ou minorés de cinq unités sans que les résultats obtenus soient essentiellement différents.

Le tableau II donne le résultat des mesures effectuées sur la céramique obtenue dans les différents cas (disques de diamètre 10 mm avec une épaisseur de 1 à 2 mm).

TABLEAU II

| Exemple N° | densité : $\frac{d \text{ mesurée}}{d \text{ théorique}}$ | Résistivité en ohm-cm sous 1 volt Fréquence de mesure : 1 KHz | Courant sous 1000V (A) | Tangente de l'angle de pertes centième) | Contante diélectrique |
|---|---|---|---|---|---|
| 1 | 0,84 | $4,3 . 10^{12}$ | - | 2,7 | 2020 |
| 2 | 0,88 | $5,5 . 10^{13}$ | - | 1,3 | 1900 |
| 3 | 0,94 | $1 . 10^{14}$ | $4.10^{-12}$ | 1,0 | 1900 |
| 4 | 0,92 | $2.. 10^{14}$ | $2,5 10^{-12}$ | 1,0 | 2120 |
| 5 | 0,93 | $2,8 . 10^{14}$ | $1,7.10^{-12}$ | 0,9 | 1880 |
| 6 | 0,94 | $1,6 . 10^{14}$ | $3.10^{-12}$ | 1,1 | 1640 |
| 7 | 0,93 | $1,7 . 10^{14}$ | $3.10^{-12}$ | 1,4 | 1800 |
| 8 | 0,92 | $1,5 . 10^{14}$ | $3.10^{-12}$ | 1,2 | 2200 |

8

| Exemple N° | densité : $\frac{d\ mesurée}{d\ théorique}$ | Résistivité en ohm-cm sous 1 volt Fréquence de mesure : 1 KHz | Courant sous 1000V (A) | Tangente de l'angle de pertes centième) | Contante diélectrique |
|---|---|---|---|---|---|
| 9 | 0,92 | $5.4 . 10^{13}$ | $1.10^{-12}$ | 1,3 | 2130 |
| 10 | 0,95 | $8,9 . 10^{13}$ | $6.10^{-12}$ | 1,2 | 1950 |
| 11 | 0,84 | $5,4 . 10^{13}$ | – | 1,3 | 1760 |
| 12 | 0,92 | $1,1 . 10^{14}$ | $5.10^{-12}$ | 1,2 | 2300 |
| 13 | 0,85 | – | – | 1,4 | 1970 |
| 14 | 0,90 | $1,5 . 10^{14}$ | $3.10^{-12}$ | 1,6 | 1600 |
| 15 | 0,90 | $1,6 . 10^{14}$ | $3.10^{-12}$ | 1,0 | 2130 |
| 16 | 0,89 | $5. 10^{13}$ | $1.10^{-11}$ | 1,3 | 1900 |
| 17 | 0,96 | – | – | 3,6 | 1200 |

9

REVENDICATIONS

1. Procédé de fabrication d'une céramique diélectrique composée en majorité de titanate de baryum ou d'une composition équivalente, caractérisé en ce qu'il comporte une synthèse préalable d'un fondant pour former une solution solide d'au moins deux oxydes appartenant au groupe des oxydes des corps suivants : aluminium, bismuth, calcium, cuivre, germanium, manganèse, plomb, silicium et titane, la quantité d'oxydes représentant en moles 0,3 à 3 % des composants de la céramique, ladite solution solide étant ensuite broyée puis mélangée avec les matières premières de fabrication de la céramique en ajoutant une quantité d'oxyde de titane représentant en moles 2 à 4 % des composants de la céramique.

2. Procédé de fabrication d'une céramique diélectrique composée en majorité de titanate de baryum ou d'une composition équivalente, caractérisé en ce qu'il comporte, au stade du mélange initial des matières premières de fabrication de la céramique, un premier ajout composé d'un mélange de poudre de deux oxydes appartenant au groupe des oxydes des corps suivants : aluminium, bismuth, calcium, cuivre, germanium, manganèse, plomb et silicium, cet ajout représentant en moles 0,3 à 3 % de l'ensemble des composants de la céramique, et un deuxième ajout constitué d'oxyde de titane et représentant en moles 2 à 4 % des composants de la céramique.

3. Procédé de fabrication d'une céramique diélectrique composée en majorité de titanate de baryum ou d'une composition équivalente, caractérisé en ce qu'il comporte, au stade du mélange initial des matières premières de fabrication de la céramique, un premier ajout constitué par de la poudre d'un oxyde appartenant au groupe des corps suivants : aluminium, bismuth, calcium, cuivre, germanium, manganèse, plomb et silicium, cet ajout représentant en moles 0,3 à 3 % de l'ensemble des composants de la céramique, et un deuxième ajout d'oxyde de titane représentant en moles 2 à 6 % de l'ensemble des composants de la céramique.

4. Procédé suivant la revendication 1, caractérisé en ce que la synthèse du fondant comporte les opérations suivantes :
- Mélange des oxydes en poudre ;
- Broyage du mélange ;
- Traitement thermique de chamottage ;
- Broyage du produit obtenu lors de l'opération précédente.

5. Procédé de fabrication suivant l'une des revendications 1, 2 et 3, caractérisé en ce qu'il comporte en outre les étapes suivantes :
- Broyage ;
- Traitement thermique de chamottage ;
- Mise en forme sous pression du produit obtenu ;
- Traitement thermique de frittage.

6. Procédé suivant la revendication 3, caractérisé en ce que le fondant ou l'ajout comporte de l'oxyde de cuivre de formule $Cu_2O$ dans une proportion de 0,7 à 0,8 % en moles de l'ensemble des matières premières et de l'oxyde de titane de formule $TiO_2$ dans une proportion de 2 à 3 % en moles de l'ensemble des matières premières.

7. Procédé suivant l'une des revendications 1 et 2, caractérisé en ce que les deux oxydes choisis sont $Cu_2O$ et $PbO$, la proportion relative de $PbO$ étant en moles de 36 à 46 %.

8. Procédé suivant l'une des revendications 1 et 2, caractérisé en ce que les deux oxydes choisis sont $SiO_2$ et $Cu_2O$, la proportion relative de $SiO_2$ étant de 3 à 13 % en moles.

11

9. Procédé suivant l'une des revendications 1 et 2, caractérisé en ce que les deux oxydes choisis sont Ca O et Cu O, la proportion relative de Ca O étant de 8 à 18 %.

10. Procédé suivant l'une des revendications 1 et 2, caractérisé en ce que les deux oxydes choisis sont Ge $O_2$ et $Bi_2 O_3$, la proportion relative de Ge $O_2$ étant de 9 à 19 %.

11. Céramique diélectrique à basse température de frittage composée en majorité de titanate de baryum ou d'une composition équivalente, caractérisée en ce qu'elle est obtenue par un procédé suivant l'une des revendications 1 à 10.

12. Composant électronique, caractérisé en ce qu'il comporte de la céramique suivant la revendication 11.

13. Composant électronique suivant la revendication 12, caractérisé en ce qu'il comporte au moins une électrode enrobée par la céramique et contenant au plus 30 % de palladium.

14. Condensateur électrique du type à couches multiples, caractérisé en ce qu'il comporte un diélectrique constitué par de la céramique suivant la revendication 11.

15. Condensateur électrique suivant la revendication 14, caractérisé en ce qu'il comporte des électrodes comportant au plus 30 % de palladium.

Office européen
des brevets

**RAPPORT DE RECHERCHE EUROPEENNE**

0010479
Numéro de la demande

EP 79 40 0711

| Catégorie | Citation du document avec indication, en cas de besoin, des parties pertinentes | Revendication concernée | CLASSEMENT DE LA DEMANDE (Int. Cl. ³) |
|---|---|---|---|
| X | <u>DE - B - 1 222 836</u> (SIEMENS & HALSKE)<br><br>* Revendications 1,2; colonne 4, lignes 11-33 *<br><br>-- | 1-3,5,<br>11,12 | C 04 B 35/00<br>       35/46<br>H 01 B 3/12<br>H 01 G 4/12 |
|  | <u>FR - A - 2 375 154</u> (N.V. PHILIPS' GLOEILAMPENFABRIEKEN)<br><br>* Revendications 1-5,7; page 1, lignes 7-17 et 31-37; page 15, lignes 28-37; page 16, lignes 1-7 et 22-25 *<br><br>-- | 1-3,<br>5-8,<br>11-15 | **DOMAINES TECHNIQUES RECHERCHES (Int. Cl. ³)** |
|  | <u>FR - A - 2 166 411</u> (NL INDUSTRIES)<br>* Revendications 1-3; page 1, lignes 7-11 et 28-39; page 2, lignes 20-37; page 3, lignes 1-2; page 4, lignes 1-15; page 5, lignes 28-37; page 6, lignes 1-9 *<br><br>-- | 1,4,5,<br>11-15 | C 04 B 35/46<br>H 01 B 3/12<br>H 01 G 4/12 |
|  | <u>FR - A - 2 338 910</u> (DRALORIC ELECTRONIC)<br><br>* Revendications 1-7, 9-11 *<br><br>-- | 1-5,<br>11-15 | **CATEGORIE DES DOCUMENTS CITES** |
| P | <u>FR - A - 2 400 754</u> (N.V. PHILIP'S GLOEILAMPENFABRIEKEN)<br><br>* Revendications 1-4; page 2, lignes 10-34; page 8, Tableau 3*<br><br>---- | 1-3,5,<br>11-15 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cite pour d'autres raisons<br><br>&: membre de la même famille, document correspondant |

Le present rapport de recherche a ete etabli pour toutes les revendications

| Lieu de la recherche | Date d'achèvement de la recherche | Examinateur |
|---|---|---|
| La Haye | 08-02-1980 | SCHURMANS |

OEB Form 1503.1  06.78